# EUROPÄISCHE PATENTSCHRIFT

(11) **EP 1 718 461 B1**
(45) Veröffentlichungstag und Bekanntmachung des Hinweises auf die Patenterteilung: **20.10.2010**
(21) Anmeldenummer: 05707083.1
(22) Anmeldetag: 29.01.2005
(51) Int. Cl.: B32B 27/08, B32B 27/34, B65D 65/40, A22C 13/00

(54) **MEHRSCHICHTIGE NAHRUNGSMITTELHÜLLE MIT ANORGANISCHEN PARTIKELN IN DER AUSSENSCHICHT**
MULTI-LAYERED FOOD CASING PROVIDED WITH INORGANIC PARTICLES IN THE OUTER LAYER
ENVELOPPE MULTICOUCHE POUR PRODUITS ALIMENTAIRES COMPRENANT DES PARTICULES INORGANIQUES DANS SA COUCHE EXTERNE

(30) Priorität: 04.02.2004 DE 102004005642
(43) Veröffentlichungstag der Anmeldung: 08.11.2006
(73) Patentinhaber: Kalle GmbH, 65203 Wiesbaden (DE)
(72) Erfinder: STALBERG, Stefanie, 65232 Taunusstein-Wehen (DE); FERON, Bernhard, 65189 Wiesbaden (DE); DELIUS, Ulrich, 60529 Frankfurt (DE)
(74) Vertreter: Plate, Jürgen
(86) Internationale Anmeldenummer: PCT/EP2005/000896
(87) Internationale Veröffentlichungsnummer: WO 2005/075192

(56) Entgegenhaltungen:
- EP-A- 0 603 678
- WO-A-2004/098298
- DE-A1- 10 314 900
- DE-A1- 10 320 327
- DE-A1- 19 631 348

## Beschreibung

Die Erfindung betrifft eine thermoplastische, mehrschichtige Nahrungsmittelhülle, bei der eine an der äußeren Oberfläche liegende Schicht mindestens einen anorganischen Feststoff in der Außenschicht enthält, der in mindestens einem thermoplastischen Kunststoff verteilt ist. Diese Oberflächenschicht zeichnet sich durch große Rauheitswerte und niedrige Glanzwerte aus. Die Folie erhält dadurch eine stumpfmatte, kollagendarmähnliche Optik und Haptik sowie eine besonders gute Griffigkeit. Nicht essbare Kollagendärme werden als Hautfaserdärme bezeichnet.

Nahrungsmittelhüllen, speziell Wursthüllen, werden traditionell aus Naturdarm, Kollagenfasern, Hautfasern, faserverstärkter Cellulose oder aus Textilien hergestellt. Diese Hüllen haben auf dem Weltmarkt nach wie vor den größten Anteil, insbesondere bei höherwertigen Wurstwaren. An zweiter Stelle folgen die Hüllen aus thermoplastischen Kunststoffen, insbesondere solche aus Polyamid oder aus Polyamid-Polyolefin-Verbundsystemen. Die Mehrzahl der thermoplastischen Hüllen wiederum wird bei der Herstellung streckorientiert, was zu thermischem Schrumpfvermögen und zu besseren mechanischen Eigenschaften führt. Das Aussehen der thermoplastischen Hüllen ist jedoch sehr künstlich. Außerdem sind die thermoplastischen Hüllen üblicherweise so glatt, dass sie den natürlich strukturierten Oberflächen eines Kollagendarms nur wenig ähneln und außerdem gleiten sie beim Füllen leicht aus der Hand.

Die Kollagen- und Hautfaserdärme werden nach einem sehr aufwendigen und umweltbelastenden Verfahren aus Rinderhäuten hergestellt: Das Hautgewebe wird mit Säuren, z.B. Milchsäure, bis zu den Fibrillen aufgeschlossen; die hochviskose Masse wird extrudiert und mit gasförmigem Ammoniak oder Ammoniumhydroxid langsam und kompakt ausgefällt und verfestigt. Beim Trocknen erfolgt dann eine Vernetzung (Härtung), um den Produkten eine ausreichende Stabilität zu verleihen, so dass sie den Brühprozeß ohne wesentlichen Festigkeitsverlust überstehen. Naturdärme wie auch Hautfaserdärme werden jedoch von den Endverbrauchern zunehmend weniger akzeptiert. Es drohen außerdem gesetzliche Beschränkungen. Eine Alternative zu den genannten Därmen ist daher wünschenswert. Cellulosedärme, selbst solche mit Faserverstärkung, können diese Aufgabe nur eingeschränkt übernehmen. Ihr Herstellverfahren ist nicht weniger aufwendig und umweltschädigend als das Verfahren bei den Kollagen- und Hautfaserdärmen.

Ein großer Vorteil der thermoplastischen Nahrungsmittelhüllen ist ihre einfache, preiswerte Herstellung. Jedoch hat der Endverbraucher vielfach Vorbehalte gegen Würste in diesen Hüllen. Die naturgemäß stark glänzende Oberfläche des Kunststoffs vermittelt oft den Eindruck eines Produktes geringeren Wertes. Der optische Eindruck ließ sich bisher nur dahingehend verbessern, dass sie matt bedruckt wurden, aber noch nicht so, dass eine natürlich Imitation einer Kollagendarm-, Hautfaserdarm- oder Cellulose-Hülle mit Faserverstärkung gelang. Hinzu kommt die schlechte Griffigkeit der Würste, wenn die Kunststoff-Oberfläche mit Feuchtigkeit oder Fett benetzt ist.

Bei Hüllen aus Naturdarm und insbesondere aus faserverstärkter Cellulose oder Kollagen sorgt die faserige Konsistenz für eine grob strukturierte, rauhe Oberfläche. Der Verbraucher, der diese Optik seit vielen Jahrzehnten kennt, assoziiert damit einen höheren Wert bzw. die traditionelle Herstellung des Wurstproduktes.

Aus DE 41 41 292 A1 sind einschichtige, transparente, biaxial orientierte, schlauchförmige Nahrungsmittelhüllen auf Polyamidbasis bekannt, die Feinstpigmente mit Partikelgrößen von 0,01 bis 15 µm enthalten. Die Feinstpigmente sollen vor allem eine geringere Verblockungstendenz bewirken.

WO 02/00026 A1 offenbart mehrschichtige, biaxial orientierte, schlauchförmige Kunststoffdärme, die aus mindestens einer Polyamid und gegebenenfalls Polyolefin enthaltenden Schicht mit darin dispergierten Nanopartikeln mit einem Anteil von 0,1 bis 4 Gew.-% besteht. Bei den Nanopartikeln handelt es sich insbesondere um Schichtsilicate, deren Ausdehnung in keiner Dimension 100 nm überschreitet.

Die beschriebene Folie soll eine hohe Transparenz besitzen und als deutlich verbesserte Sauerstoffbarriere wirken.

In WO 01/03508 A1 wird eine Lebensmihelhülle dargestellt, auf die auf der Außenseite einer Cellulose-Nahrungsmittelhülle ein Coating mit einer wässerigen Suspension auf Basis von kationischem Harz und Siliciumoxid aufgebracht wird. Die Partikelgröße der anorganischen Substanz beträgt in der Regel 0,1 bis 25 µm, wobei deren Anteil von 20 bis 83,3 Gew.-% variieren kann.

Hochpermeable Verbundfolien werden in den Veröffentlichungen US 2003/0077471 A1 und WO 03/020513 A1 beschrieben. Diese bestehen aus mindestens zwei Schichten: aus einer Innenschicht, die in der Regel aus Polyolefin und einem anorganischen Follstoff besteht, und aus einer Außenschicht, die eine Mischung aus mindestens zwei inkompatiblen Polymeren, vorzugsweise ataktisches Polypropylen und low-density Polyethylen bzw. Polystyrol und einen Haftvermittler enthält. Durch die Orientierung dieses Mehrschichtverbundes werden Mikrorisse erzeugt, die für die hohe Permeabilität der Folien verantwortlich sind. Anwendungen dieser Materialien liegen vor allem im Bereich der Hygleneartikel, z.B. Babywindeln.

Gegenstand von DE 196 31 348 A1 ist eine Mischung aus 55 bis 99 Gew.-% thermoplastischem PA und 0,1 bis 15 Gew.-% eines mineralischen Füllstoffs mit einem Länge/Durchmesser-Verhältnis von 1:5 bis 1:100, Die Mischung kann darüber hinaus noch bis zu 30 Gew.-% an weiteren Zusatzstoffen enthalten. Der Füllstoff besteht vorzugsweise aus plättchenförmigen Schichtsilikaten (Glimmer-Partikeln). Offenbart sind ferner durch Coextrusion hergestellte mehrschichtige Nahrungsmittelhüllen. Konkret erwähnt sind Wursthüllen mit einem Aufbau PA /Haftvermittier(HV) / PE / HV / PA und PA / HV / PA. Der Füllstoff ist dabei vorzugsweise nur in der äußeren PA-Schicht enthalten. Durch ihre besondere Form ordnen sich die Füllstoffpartikel bei der Extrusion parallel zur Folienoberfläche an, so dass praktisch keine Oberllächenrauhigkeit entsteht. Der Füllstoff dient vielmehr dazu, die Sauerstoff- und Wasserbarriereeigenschaften der Folle zu verbessern.

In der EP 0 603 678 A1 ist eine mindestens 4-schichtige, biaxial streckorientierte Polymerhülle offenbart mit einer Innen- und einer Außenschicht im wesentlichen aus aliphatischem PA, einer dazwischen liegenden Schicht aus Ethylen- oder Propylen-Homopolymeren oder -Copolymeren und einer weiteren Schicht überwiegend aus aliphatischem PA, die anorganische und/oder organische Mischungszusätze enthält. Die Mischungszusätze können Farbpigmente mit einer Größe von bis zu 25 µm sein (bei Einfärbungen mit Metalleffekt). Im Normalfall beträgt die Größe der Partikel jedoch nur etwa 1 µm. Die Partikel dienen allein zum Einfärben der weiteren PA-Schicht. Dabei wird ein Farbmasterbatch eingesetzt. Die Farbstoffpigmente sind zu klein bzw. durch ihre plättchenförmige Struktur ungeeignet, um eine rauhe und natürlich wirkende Oberfläche zu erzeugen.

In der DE 103 20 327 A1 (= WO 2004/098298 A) ist eine ein- oder mehrschichtige Polymerhülle offenbart, die einen anorganischen und/oder organischen Füllstoff umfaßt und dadurch ein natürliches Erscheinungsbild aufweist. Bei der mehrschichtigen Ausführungsform bildet die partikelhaltige Schicht stets die Außenschicht. Die Schicht bzw. die Außenschicht enthält darüber hinaus stets ein wasserlösliches synthetisches Polymer. Sie verleiht der Hülle eine relativ hohe Wasserdampfdurchlässigkeit von 100 bis 1.500 g/m² d.

In der älteren, nicht vorveröffentlichten WO 2005/033187 ist eine mehrschichtige, schlauchförmige Nahrungsmittelhülle offenbart, die mindestens eine Schicht auf Basis von Polyamid und/oder Copolyamid umfaßt. Die äußere Schicht enthält zudem einen organischen Füllstoff, der die Außenseite der Hülle matt wirken läßt.

In den aufgeführten Publikationen steht das natürliche Aussehen und die entsprechende Oberflächenbeschaffenheit, d.h. die Nachstellung der besonderen Haptik und Optik eines Kollagendarms, nicht im Vordergrund des Interesses. Die eingebauten anorganischen Substanzen dienen dort vor allem einer besseren Griffigkeit beim Füllprozess insbesondere von Hand, zur Erzeugung einer geringeren Verblockungstendenz der aufgerollten Ware, zur Erzielung einer verbesserten Sauerstoffbarriere bzw. einer besonders hohen Permeabilität. Die feinen Partikel ermöglichen auch keine ausreichende Rauheit und Griffigkeit. Außerdem werden zum Teil andere Polymermatrizes bzw. Kombinationen unterschiedlicher Polymere eingesetzt als die in der erfindungsgemäßen Hülle verwendeten Materialien.

Es bestand daher die Aufgabe, eine mehrschichtige Nahrungsmittelhülle vorzuschlagen, die so gestaltet werden kann, dass sie weitgehend oder gänzlich das Aussehen oder/und die Griffigkeit eines Natur-, Kollagen-, Hautfaser- bzw. faserverstärkten Cellulosedarms aufweisen kann.

Die Aufgabe wird gelöst mit einer mehrschichtigen coextrudierten thermoplastischen Nahrungsmittelhülle, aufgebaut aus mindestens zwei Schichten einschließlich einer Außenschicht (Z), wobei die Außenschicht mehr als 50 Gew.-% an thermoplastischen Bestandteilen enthält und mindestens eine Schicht, die nicht die der Außenschicht (Z) ist, mehr als 50 Gew.-% an thermoplastischen Bestandteilen auf Basis von (Co-)Polyamid(en) enthält, die dadurch gekennzeichnet ist, daß in der Außenschicht (Z) anorganische Partikel verteilt sind, die zumindest teilweise einen Äquivalentkugeldurchmesser von mehr als 20 µm aufweisen, und die Oberfläche der Außenschicht (Z) eine Rauhigkeit R_{z} gemittelt über 5 Messungen von mindestens 5,0 µm aufweist, wobei die Außenschicht kein wasserlösliches synthetisches Polymer enthält.

Die Zusammensetzungen der einzelnen Schichten werden entsprechend ihrer Funktion gewählt. In einer bevorzugten Ausführungsform liegt unter der Außenschicht (Z) mindestens eine Schicht mit mechanisch tragender Funktion.

Die erfindungsgemäße Nahrungsmittelhülle kann insbesondere 2, 3, 4, 5, 6, 7, 8, 9 oder 10 Schichten in Abfolge enthalten. Diese Hülle kann daher in einzelnen Ausführungsformen eine Außenschicht (Z) sowie eine, zwei, drei oder vier weitere Schichten aufweisen. In bevorzugten Ausführungsformen weist die erfindungsgemäße Hülle neben der Außenschicht (Z) insbesondere eine, zwei, drei oder vier weitere Schicht/en auf, die Funktionsschichten, z.B. Schichten des Typs (A), (B) oder/und (C), sind. Die einzelnen Schichten können -- müssen aber nicht - sich deutlich voneinander abgrenzen. Zwei aneinander grenzende Schichten können fließende Übergänge zeigen oder/und eine unruhig rauh wechselnde Grenzfläche zwischen zwei Schichten aufweisen.

Die Nahrungsmittelhülle ist vorzugsweise schlauchförmig, zweckmäßig mit einem kreisförmigen Querschnitt, sowie flexibel. Sie kann insbesondere als Wursthülle, aber auch als Hülle für Molkereiprodukte und andere Nahrungsmittel verwendet werden. Die Nahrungsmittelhülle kann beispielsweise in Form von Abschnitten, von gerafften Raupen, von Naturdärmen, z.B. Fettenden oder/und in Kranzformen, eingesetzt werden.

Gegenüber dem Stand der Technik zeichnet sich die erfindungsgemäße Wursthülle vor allem durch ihr Erscheinungsbild ähnlich einem Kollagendarm, Hautfaserdarm, faserverstärkten Cellulosedarm oder/und Naturdarm aus, das durch einen mehrschichtigen Aufbau insbesondere aus synthetischen thermoplastischen Polymeren sowie einer an der äußeren Oberfläche angeordneten Schicht (Z) aus einem Gemisch von mindestens einem anorganischen Feststoff und mindestens einem thermoplastischen Kunststoff erzielt wird.

Unter thermoplastischen Substanzen im Sinne dieser Anmeldung werden insbesondere solche verstanden, die aus einem wesentlichen Anteil von typisch thermoplastischen Polymeren bestehen. Viele dieser Polymere weisen oberhalb der Gebrauchstemperatur und unterhalb des Bereiches des Schmelzens einen Fließübergangsbereich auf oder/und - insbesondere bei zumindest teilweise kristallinen Polymeren - einen Schmelzpunkt.

Die Außenschicht (Z) enthält vorzugsweise auch anorganische Partikel mit einem Äquivalentkugeldurchmesser größer als 25 µm oder größer als 30 µm, besonders bevorzugt größer als 35 µm oder größer als 40 µm, ganz besonders bevorzugt größer als 45 µm oder größer als 50 µm, insbesondere größer als 55 µm oder größer als 60 µm, vor allem größer als 65 µm oder größer als 70 µm. Es können jedoch in manchen Ausführungsformen auch anorganische Partikel mit einem Äquivalentkugeldurchmesser größer als 75 µm, größer als 80 µm, größer als 85 µm, größer als 90 µm, größer als 95 µm oder größer als 100 µm auftreten.

Als anorganische partikuläre Substanzen, die insbesondere der Außenschicht (Z) der Hülle vorteilhaft zugegeben werden können, eignen sich unter anderem:
1. Fasern aus Glas, z.B. Glasfasern, Glasfilamente oder/und Glasstapelfasern;
2. Kurzfasern aus Steinwolle, z.B. aus Basaltwolle, Schlackenwolle oder/und Mineralwollfasem;
3. Füllstoffe bzw. Verstärkungsmaterialien aus Carbonat(en), z.B. aus Kreide, Kalksteinmehl, Calcit, gefälltem Calciumcarbonat, Magnesiumcarbonat, Bariumcarbonat, Dolomit oder/und anderen Mischcarbonaten;
4. Sulfate, z.B. Bariumsulfat oder/und Calciumsulfat;
5. Silicate, z.B. Talk, Pyrophyllit, Chlorite, Hornblenden, Glimmer, Kaoline, Tone, Wollastonit, Gesteinsmehl wie z.B. Schiefermehl, gefällte oder/und natürliche Alkali-haltige oder/und Erdalkali-haltige Silicate, Silicate mit mehreren Kationen wie z.B. MgFe-, AlMg-, CaAl-, NaAl- bzw. KAI-Silicate, Feldspäte, Feldspatvertreter, Mullite, Zeolithe oder/und Ca-Metasilicate;
6. Kieselsäuren von unterschiedlicher Art, z.B. Quarz, Quarzgut, Cristobalit, Erden oder/und Mahlgüter von Stoffen mit sehr hohem SiO ₂-Gehalt wie Kieselgur oder/und Neuburger Kieselerde, gefällte bzw. pyrogene Kieselsäure, Glasmehl, Bimsmehl, Perlit, feingemahlene Fritten oder/und (Mikro-)Glaskugeln oder/und Aluminiumsilicatkugeln als Vollkugeln, Hohlkugeln oder/und deren Fragmenten;
7. Oxide, z.B. Aluminiumhydroxide, Aluminiumoxide, Magnesiumhydroxid, Magnesiumoxid, Titandioxide, Siliciumdioxide oder/und
8. weitere wie Kohlenstofffasern, Ruß- oder/und Graphitpartikel.

Insbesondere bestehen die anorganischen Partikel vorwiegend oder weitgehend aus Partikeln auf Basis von Aluminiumoxid, Carbonat, Phosphat, Siliciumoxid, Silicat, Sulfat, Gestein oder/und glasartiger Substanz.

Die Oberfläche der anorganischen Partikel kann z.B. mit einem Haftvermittler modifiziert sein, so dass eine höhere Verträglichkeit mit der umgebenden Kunststoffmatrix erzielt werden kann, oder farblich beschichtet sein. In der polymeren Matrix können an den anorganischen Partikeln gegebenenfalls Hohlräume auftreten, insbesondere durch das Verstrecken.

Die größeren anorganischen Partikel in der Außenschicht (Z) sind insbesondere förderlich für die Rauhigkeit und Griffigkeit der Hülle. Ein Anteil an mittelgroßen oder/und feineren anorganischen Partikeln kann insbesondere für die Verstärkung des matten Aussehens und die Erzeugung einer Feinstruktur dienen. Hierbei kann ein Gemisch mit unterschiedlichen Partikelformen vorliegen. Der Anteil der größeren Partikel von primär zweidimensionaler Erstreckung, z.B. Plättchen, ist vorzugsweise gering oder (praktisch bei) Null.

In manchen Ausführungsformen ist wenigstens ein Teil der anorganischen Partikel vorzugsweise von im wesentlichen isometrischer, linealartiger, nadeliger oder/und faseriger Form. Es ist dann u.U. bevorzugt, dass die meisten der eingesetzten Partikel, insbesondere die größeren, vorzugsweise eine derartige Form aufweisen. Vorzugsweise wird eine Mischung aus anorganischen Partikeln eingesetzt, die sowohl im wesentlichen isometrische Partikel und im wesentlichen linealartige, nadelige oder/und faserige Partikel aufweist, insbesondere in einem Verhältnis im Bereich von 5 : 95 bis 95 : 5, vorzugsweise im Bereich von 15 : 85 bis 95 : 5, besonders bevorzugt mehr als 25 : 75 oder mehr als 35 : 65 bzw. weniger als 75 : 25 bzw. weniger als 65 : 35, ganz besonders bevorzugt etwa 45 : 55 oder etwa 55 : 45. Letztere können teilweise oder gänzlich, etwas oder stark ausgerichtet sein. Letztere können aber auch bevorzugt irregulär in der Außenschicht (Z) enthalten sein, um keine Vorzugsrichtung erkennen zu lassen.

Die anorganischen Partikel in der Außenschicht (Z), vor allem solche in Form von Fasern oder/und größere im wesentlichen isometrische Partikel, verleihen der Hülle eine sehr natürliche seidenmatte Optik und eine gut griffige Haptik. Die Oberfläche erhält dadurch eine leichte Rauhigkeit, die über die Art, Menge und Größenverteilung der Partikel eingestellt werden kann. Über diesen Partikelanteil kann zudem die Ringelfähigkeit der Hülle beeinflußt werden. Ferner wirken die anorganischen Partikel als Verstärkungsmittel, wodurch die Kaliberstabilität des gefüllten Materials (Variation der Durchmesser) gegenüber dem ungefüllten deutlich erhöht ist.

Das Gewichtsverhältnis zwischen anorganischen Partikeln und Kunststoffen in der gesamten Nahrungsmittelhülle beträgt vorzugsweise 0,01 : 99,99 bis zu 40 : 60, besonders bevorzugt mindestens 0,05 : 99,95 bzw. bis zu 30 : 70, ganz besonders bevorzugt mindestens 0.1 : 99,9 bzw. bis zu 20 : 80, insbesondere mindestens 0,3 : 99,7 oder mindestens 0,5 : 99,5 bzw. bis zu 16 : 84, bis zu 12 : 88 oder bis zu 8 : 92, vor allem mindestens 0,8 : 99,2 oder mindestens 1 : 99 bzw. bis zu 6 : 94 oder sogar bis zu 4 : 96.

Das Gewichtsverhältnis zwischen anorganischen Partikeln und Kunststoffen in der Außenschicht (Z) oder/und in einer weiteren Schicht - jeweils bezogen auf eine Schicht - beträgt vorzugsweise 0,1 : 99,9 bis zu 50 : 50, besonders bevorzugt mindestens 0,3 : 99,7 bzw. bis zu 40 : 60, ganz besonders bevorzugt mindestens 0,5 : 99,5 bzw. bis zu 30 : 70, insbesondere mindestens 0,75 : 99,25 oder mindestens 1 : 99 bzw. bis zu 25 : 75 oder bis zu 20 : 80, vor allem mindestens 1,5 : 98,5 oder mindestens 2 : 98 bzw. bis zu 15 : 85 oder sogar bis zu 10 : 90.

Als Kunststoffkomponente(n) in der Außenschicht (Z) der Hülle sind prinzipiell alle thermoplastischen Polymere geeignet wie z.B. thermoplastische Polyurethane, thermoplastische Polyetherurethane, aliphatische (Co-)Polyamide, aliphatische oder/und teilaromatische (Co-)Polyester, Polyester-ether-urethane, daneben gegebenenfalls auch Vinylcopolymere wie z.B. Ethylen-Vinylacetat-Copolymere. Unter den Polyurethanen sind Polyaddukte, die z.B. unter Reaktion von Toluylendiisocyanat (TDI) Isophorondiisocyanat oder/und Hexamethylendiisocyanat mit Poly-1,2-propandiol (Polypropylenglykol, PPG) oder/und Poly-1,4-butandiol (Polytetramethylenglykol, PTMG) hergestellt wurden, bevorzugt. Unter den Polyamiden sind PA6, PA66, PA12, PA6/66 und PA6/12 besonders geeignet. Unter den Polyestern sind Polylactid, Polycaprolacton, Copolymere von aliphatischen Diolen mit aliphatischen Dicarbonsäuren und Terephthalsäure sowie Poly(butylenglykol-terephthalat) besonders bevorzugt. Vielfach enthält die Zusammensetzung der Außenschicht (Z) ein Gemisch mit einer oder mit mindestens zwei dieser thermoplastischen Polymere.

Der Anteil an thermoplastischen Bestandteilen in der Außenschicht (Z) ist größer als 50 Gew.-%, vorzugsweise größer als 55 oder als 60 Gew.-%, besonders bevorzugt größer als 65 oder als 70 Gew.-%, gegebenenfalls sogar größer als 75, 80 oder 85 Gew.-%.

Die Schicht (Z) kann darüber hinaus weitere organische Substanzen, z.B. Kohlenhydrate, insbesondere Stärke, oder/und Proteine oder/und gegebenenfalls Additive enthalten, z.B. weitere hoch-oder/und niedrigmolekulare Bestandteile wie weichmachende Substanzen, z.B. Glycerin, Polyethylenglykole, Glycerincarbonsäureester, Phthalsäureester bzw. Stabilisatoren bakterizide oder/und fungizide Substanzen.

Die Farbe und die Farbvariation der coextrudierten Nahrungsmittelhüllen kann durch Zusatz von anorganischen oder/und organischen Farbstoffen oder/und anorganischen oder/und organischen Farbpigmenten zu der Schicht (Z) oder/und zu einer weiteren Schicht eingestellt werden und z.B. durch unterschiedliche Mengen und unterschiedliche Homogenität bzw. Strukturierung variiert werden.

Die Außenschicht (Z) ist vorzugsweise homogen oder im wesentlichen homogen aufgebaut oder im wesentlichen homogen, wenn von der Verteilung der anorganischen oder/und organischen Partikel oder/und von der Verteilung der anorganischen oder/und organischen Farbstoffe oder/und von Farbunterschieden abgesehen wird.

Die Außenschicht (Z) enthält vorzugsweise mindestens 0,05 Vol.-% oder mindestens 0,2 Vol.-% anorganische Partikel mit einem Äquivalentkugeldurchmesser von mindestens 20 µm oder mit einem Partikelvolumen von mindestens 4189 µm³, besonders bevorzugt mindestens 0,05 Vol.-% oder mindestens 0,2 Vol.-% anorganische Partikel mit einem Äquivalentkugeldurchmesser von mindestens 25 µm bzw. mit einem Partikelvolumen von mindestens 8181 µm³ oder mindestens 0,05 Vol.-% oder mindestens 0,2 Vol.-% anorganische Partikel mit einem Äquivalentkugeldurchmesser von mindestens 30 µm bzw. mit einem Partikelvolumen von mindestens 14137 µm³, ganz besonders bevorzugt mindestens 0,05 Vol.-% oder mindestens 0,2 Vol.-% anorganische Partikel mit einem Aquivalentkugeldurchmesser von mindestens 40 µm bzw. mit einem Partikelvolumen von mindestens 33510 µm³ oder mindestens 0,05 Vol.-% oder mindestens 0,2 Vol.-% anorganische Partikel mit einem Äquivalentkugeldurchmesser von mindestens 45 µm bzw. mit einem Partikelvolumen von mindestens 47713 µm³, insbesondere mindestens 0,05 Vol.-% oder mindestens 0,2 Vol.-% anorganische Partikel mit einem Äquivalentkugeldurchmesser von mindestens 50 µm bzw. mit einem Partikelvolumen von mindestens 65450 µm³ oder mindestens 0,05 Vol.-% oder mindestens 0,2 Vol.-% anorganische Partikel mit einem Äquivalentkugeldurchmesser von mindestens 55 µm bzw. mit einem Partikelvolumen von mindestens 87114 µm³, vor allem mindestens 0,05 Vol.-% oder mindestens 0,2 Vol.-% anorganische Partikel mit einem Äquivalentkugeldurchmesser von mindestens 60 µm bzw. mit einem Partikelvolumen von mindestens 113097 µm³ oder mindestens 0,05 Vol.-% oder mindestens 0,2 Vol.-% anorganische Partikel mit einem Äquivalentkugeldurchmesser von mindestens 70 µm bzw. mit einem Partikelvolumen von mindestens 179594 µm³.

Bei dererfindungsgemäßen Hülle kann die Gesamtheit der anorganischen Partikel der Außenschicht (Z) oder können zumindest ihre im wesentlichen isometrisch geformten Partikel eine Äquivalentkugeldurchmesserverteilung vorzugsweise mindestens im Bereich zwischen 20 und 40 µm aufweisen, besonders bevorzugt im Bereich zwischen 25 und 50 µm, zwischen 30 und 60 µm oder zwischen 40 und 70 µm, ganz besonders bevorzugt im Bereich zwischen 50 und 80 µm, zwischen 60 und 90 µm oder zwischen 70 und 100 µm. Neben dem gewählten, hier genannten Bereich können darüber hinaus insbesondere auch feinere als die genannten Partikelgrößen vorhanden sein.

Die Gesamtheit deranorganischen Partikel derAußenschicht (Z) enthält bei einem Teil derAusführungsformen vorzugsweise zu mindestens 10 Vol.-% des Volumens aller anorganischen Partikel im wesentlichen isometrisch geformte Partikel, besonders bevorzugt zu mindestens 30 Vol.-%, ganz besonders bevorzugt zu mindestens 50 Vol.-%, insbesondere zu mindestens 70 Vol.-%.

Die Gesamtheit der anorganischen Partikel der Außenschicht (Z) enthält bei einem Teil der Ausführungsformen - soweit derartige Partikelformen in gewissem Umfang enthalten sind - vorzugsweise zu mindestens 2 Vol.-% des Volumens aller anorganischen Partikel im wesentlichen faserig, nadelig oder linealförmig geformte Partikel, besonders bevorzugt zu mindestens 5 Vol.-%, ganz besonders bevorzugt zu mindestens 10 Vol.-%, insbesondere zu mindestens 20 Vol.-%.

Die Außenschicht (Z) enthält vorzugsweise mindestens 0,5 Gew.-% anorganische Partikel, besonders bevorzugt mindestens 1 Gew.-%, ganz besonders bevorzugt mindestens 2 Gew.-%, insbesondere mindestens 4 Gew.-%, vor allem mindestens 6 oder mindestens 8 Gew.-%.

Falls jedoch ein Anteil an Fasern der Zusammensetzung der Außenschicht (Z) zugesetzt ist, enthält die Schicht (Z) bei einem Teil der Ausführungsformen vorzugsweise mindestens 0,1 Gew.-% faseriger anorganischer Partikel, besonders bevorzugt mindestens 0,5 Gew.-%, ganz besonders bevorzugt mindestens 1 Gew.-%, insbesondere mindestens 2 Gew.-%, vor allem mindestens 4 Gew.-%.

Um den haptischen Eindruck von Natur-, Kollagen-, Hautfaser- bzw. faserverstärkten Cellulosedärmen zu erzielen, werden vorzugsweise folgende jeweils über mindestens 5 Messungen gemittelte Rauheitswerte der Außenschichtoberfläche eingestellt:
Rₐ ≥ 0,8 µm , besonders bevorzugt Rₐ ≥ 1,0 µm, ganz besonders bevorzugt Rₐ ≥ 1,2 µm, insbesondere Rₐ ≥ 1,4 µm, vor allem Rₐ ≥ 1,6 µm oder/und
R_{z} ≥ 5,0 µm, besonders bevorzugt R_{z} ≥ 6,0 µm, ganz besonders bevorzugt R_{z} ≥ 7,0 µm, insbesondere R_{z} ≥ 8,0 µm, vor allem R_{z} ≥ 9,0 µm oder/und
Rₘₐₓ ≥ 6,0 µm, besonders bevorzugt Rₘₐₓ ≥ 7,5 µm, ganz besonders bevorzugt Rₘₐₓ ≥ 9 µm, insbesondere Rₘₐₓ ≥ 10,5 µm, vor allem Rₘₐₓ ≥ 12 µm.

Insbesondere liegen die gemittelten Rauheitswerte bei Rₐ ≥ 1,8 µm, Rₐ ≤ 5,0 µm. R_{z} ≥ 10 µm, R_{z} ≤ 35 µm, Rₘₐₓ ≥ 13 µm oder/und Rₘₐₓ ≤ 45 µm. Vor allem liegen die gemittelten Rauheitswerte Rₐ bei etwa 2, 2,2, 2,4, 2,6, 2,8, 3,0, 3,2, 3,4, 3,6, 3,8, 4,0, 4,2, 4,4, 4,6 oder 4,8 µm, R_{z} bei etwa 11, 12, 13, 14, 15, 16, 17, 19, 21, 23, 25, 27, 29, 31 oder 33 µm oder/und Rₘₐₓ bei etwa 14, 15, 16, 17, 18, 19, 20, 21, 23, 25, 27, 29, 31, 33, 35, 37, 39, 41 oder 43 µm.

Um den optischen Eindruck von Natur-, Kollagen-, Hautfaser- bzw. faserverstärkten Cellulosedärmen zu erzielen, sollten vorzugsweise folgende jeweils über mindestens 5 Messungen gemittelte Glanzwerte der Außenschichtoberfläche eingestellt werden, die bei einem Einstrahlwinkel von 60 ° gemessen werden:
Glanzwerte ≤ 65, besonders bevorzugt ≤ 55, ganz besonders bevorzugt ≤ 45, insbesondere ≤ 35, vor allem ≤ 25. Je geringer die Glanzwerte sind, desto matter wirkt die Außenschicht (Z).

Insbesondere liegen die gemittelten Glanzwerte bei ≥ 0,5, ≥ 1, ≥ 2, ≥ 4, ≥ 6 oder ≥ 8 bzw. bei ≤ 24, ≤ 22, ≤ 20, ≤ 18, ≤ 16 oder ≤ 14. Vor allem liegen sie bei etwa 1, 3, 5, 7, 9, 11, 13, 15, 17, 19 oder 21.

Vorzugsweise weist mindestens eine weitere Schicht neben der Außenschicht (Z) die Kunststoff-typischen, mechanischen Eigenschaften der Hülle wie z.B. hohe Reißfestigkeit oder/und hohe Elastizität auf. Diese mindestens eine Schicht ist vielfach als tragende Schicht der Hülle von Bedeutung. Gegebenenfalls sorgt mindestens eine Schicht neben der Außenschicht (Z) für eine hohe Gas- und Wasserdampfdichtigkeit. In einzelnen Ausführungsformen kann auch die Außenschicht (Z) eine hohe Gas- und Wasserdampfdichtigkeit zeigen.

Diese weiteren Schichten neben der Außenschicht (Z) enthalten bevorzugt Kunststoffe auf Basis von (Co-)Polyamid, Polyolefin, Ethylen-Vinylalkohol-Copolymer (EVOH), Vinylidenchlorid-(Co-)Polymer oder/und (Co-)Polymerisate mit Haftvermittler-Eigenschaften. Besonders bevorzugt ist, dass mindestens eine der Schichten der Hülle einen Anteil auf Basis von (Co-)Polyamid von mindestens 50 Gew.-% oder von mindestens 55 Gew.-% oder von mindestens 60 Gew.-% aufweist, ganz besonders bevorzugt mindestens 65 Gew.-% oder mindestens 70 Gew.-% oder mindestens 75 Gew.-%, ganz besonders bevorzugt mindestens 80 Gew.-% oder mindestens 85 Gew.-% oder mindestens 90 Gew.-%, insbesondere mindestens 95 Gew.-% oder mindestens 98 Gew.-% oder sogar etwa 100 Gew.-%. Diese Schicht kann auch die Außenschicht (Z) sein und kann gegebenenfalls auch reich an (Co-)Polyamid sein. Es ist jedoch oft bevorzugt, dass eine andere Schicht als die Außenschicht (Z) die Funktionen und die Zusammensetzung der Schicht (A) aufweist. Die Außenschicht (Z) ist in vielen Fällen allein schon wegen ihres Gehalts an vergleichsweise großen anorganischen Partikeln keine tragende Schicht, da sie die entsprechenden Eigenschaften vielfach nicht erreicht.

Die an (Co-)Polyamid reicheren Schichten (nachfolgend mit "A" abgekürzt) können ein oder mehrere aliphatische Polyamide oder/und aliphatische Copolyamide sowie gegebenenfalls auch einen Gehalt an teilaromatischen Polyamiden oder/und an teilaromatischen Copolyamiden enthalten. Beispiele hierfür sind:

| | |
|---|---|
| Aliphatische Polyamide: | PA6, PA66, PA12; |
| Aliphatische Copolyamide: | PA4/6, PA6/66, PA6/69, PA6/9, PA6/10, PA6/12, Polyetheramide, Polyesteramide, Polyetheresteramide, Polyamidurethane, Poly(ether-Block-Amide); |
| Teilaromatische Polyamide: | PA6-I, Nylon-MXD6 (Polykondensat aus m-Xylylendiamin und Adipinsäure) |
| Teilaromatische Copolyamide: | PA6-I/6-T, PA-6/6-I. |

Besonders bevorzugte Komponenten sind PA6, PA66, PA12, PA6/66, Nylon-MXD6 und PA6-I/6-T. Besonders bevorzugte Mischungen enthalten mindestens zwei dieser Polyamide. Der Anteil an teilaromatischen (Co)-Polyamiden beträgt vorzugsweise nicht mehr als 40 Gew.-% bezogen auf eine Schicht (A), besonders bevorzugt nicht mehr als 25 Gew.-%.

Zusätzlich kann die Schicht (A) noch andere Polymere enthalten, beispielsweise olefinische Copolymere wie EMAA (Ethylen-Methacrylsäure-Copolymer), hieraus abgeleitete Ionomere, EVOH oder auch (heiß-)wasserlösliche synthetische Polymere wie z.B. Polyvinylalkohol - gegebenenfalls teilweise und vollständig verseift, Copolymere des Vinylalkohols mit Propen-1-ol, Polyalkylenglykole, Polyvinylpyrrolidon, Copolymere aus Vinylpyrrolidon mit mindestens einem α,β-olefinisch ungesättigten Monomerbaustein, Polymerisate von N-Vinylalkylamiden oder (Co-)Polymere der Acrylsäure oder/und des Acrylamids. Der Anteil der weiteren Polymere beträgt vorzugsweise nicht mehr als 35 Gew.-% bezogen auf die Schicht (A). Darüber hinaus können die Schichten (A) bei Bedarf auch noch Pigmente oder/und sonstige Kunststoff-typische Additive enthalten.

In manchen Fällen ist es bevorzugt, dass mindestens eine Schicht als Wasserdampfbarriere wirkt. Dies kann mit mindestens einer polyolefinischen Schicht erzielt werden. Die polyolefinischen Schichten (nachfolgend mit "B" abgekürzt) bestehen üblicherweise im wesentlichen aus Polyethylen, Polypropylen oder/und aus Copolymeren mit Einheiten aus Ethylen, Propylen oder/und α-Olefinen bevorzugt mit 4 bis 8 C-Atomen oder/und aus Dienen. Auch funktionalisierte Vinylmonomere wie Vinylacetat, (Meth-)Acrylsäure und (Meth-)Acrylsäureester kommen als Co-Bausteine in Frage. Geeignet sind insbesondere C₂/C₃- oder/und C₂/C₈-Copolymere. Den Schichten (B) kommt in erster Linie die Funktion einer Feuchtigkeitsbarriere zu, da Polyolefine gemeinhin sehr geringe Wasserdampfdurchlässigkeiten besitzen. Darüber hinaus können Schichten (B) noch Farbstoffe oder/und feinkörnige Pigmente enthalten, wie sie typischerweise zur Einfärbung oder zum UV-Schutz eingesetzt werden. Diese Schichten können daher auch eingefärbt sein.

Um eine gute Barriere für Sauerstoff und sonstige Gase zu erzielen, können bei Bedarf Schichten aus Kunststoffen mit entsprechender Sperrwirkung hinzugefügt werden (nachfolgend mit "C" bezeichnet). Geeignete Kunststoffe hierfür sind Ethylen-Vinylalkohol-Copolymere , die gegebenenfalls teil- oder vollverseift sind (EVOH), und Vinylidenchlorid-Copolymere z.B. mit Vinylchlorid oder Methylacrylat als Comonomer, (PVDC). Diesen Polymeren können auch Additive wie z.B. Weichmacher sowie andere Polymere wie z.B. Copolyamide oder Ionomere beigemischt sein. Auch die Schichten (B) bzw. (C) sind üblicherweise von thermoplastischer Natur.

Zu berücksichtigen ist, dass Schichten entsprechend (A), (B) und (C) im Folienverbund z.T. nicht von selbst gut aneinander haften. Eine gute Haftung wird erzielt, indem zusätzlich mindestens eine Haftvermittlerschicht ("HV") als Zwischenschicht oder/und Innenschicht eingebracht wird, die bei der Folienherstellung z.B. durch Coextrusion Adhäsion zu beiden jeweils angrenzenden Schichten ausbildet. Geeignete Haftvermittler sind insbesondere Pfropf- oder/und lineare Copolymere, wobei diese Copolymere hier auch mehr als zwei Monomerarten beinhalten können, mit Ethylen- oder/und Propylen-Einheiten sowie Bausteinen aus der Gruppe bestehend aus (Meth-)Acrylsäure, (Meth-)Acrylsäureester, Vinylacetat und Maleinsäureanhydrid. Besonders bevorzugt sind u.a. Maleinsäureanhydrid-gepfropftes Polyethylen (LLDPE-g-MAA), Ethylen-Acrylsäureester-Copolymere sowie Ethylen-Vinylacetat-Copolymere (EVA). Die genannten Polymere können einzeln oder in Mischung in den HV-Schichten enthalten sein. Zusätzlich können die HV-Schichten noch weitere Polymere, z.B. Polyethylen, oder/und sonstige Additive oder/und Pigmente enthalten.

Die HV-Schichten können auch weggelassen werden, wenn eine ausreichende Eigenhaftung zwischen den Funktionsschichten gegeben ist wie sie z.B. oft zwischen Polyamid und manchem EVOH besteht oder indem man die Haftvermittlerkomponente in die Komponenten z.B. der angrenzenden Schicht (B) einmischt.

Die Unterschiede in Aufbau, Struktur oder/und Zusammensetzung zwischen den einzelnen Schichten können jeweils unabhängig voneinander von Schicht zu Schicht gering oder deutlich ausgeprägt sein. Die Übergänge zwischen den einzelnen Schichten können jeweils unabhängig voneinander von Schichtgrenze zu Schichtgrenze deutlich oder schwach ausgeprägt oder fließend sein. Die Schichtgrenzen können im wesentlichen durchgängig eben oder insbesondere aufgrund benachbarter größerer Partikel oder Partikelansammlungen recht rauh und gegebenenfalls dann auch mit starker Schwankung der einzelnen Schichtdicken sein. Besonders bevorzugt ist, dass unter der Außenschicht (Z) mindestens eine Schicht mit mechanisch tragender Funktion besteht.

Die Außenschicht (Z) lässt sich mit den anderen genannten Schicht-Typen zu unterschiedlichen Mehrschichtstrukturen kombinieren. Wesentlich ist immer, dass die Schicht (Z) an der äußeren Hüllenoberfläche angeordnet ist und dass darunter mindestens eine Schicht mit mechanisch tragender Funktion existiert. Bevorzugte Schichtstrukturen sind (zu den Abkürzungen siehe weiter oben):

| Schlauchaußenseite : Schlauchinnenseite | |
|---|---|
| 1) | Z/A |
| 2) | Z/A/A |
| 3) | Z/A/B |
| 4) | Z/HV/A |
| 5) | Z/HV/C |
| 6) | Z/A/HV/A |
| 7) | Z/A/HV/C |
| 8) | Z/HV/A/HV |
| 9) | Z/HV/C/HV |
| 10) | Z/HV/A/HV/A |
| 11) | Z/A/HV/B/HV/A |
| 12) | Z/A/HV/C/HV/A |
| 13) | Z/HV/A/HV/B/HV/A |
| 14) | Z/HV/A/HV/C/HV/A |
| 15) | Z/B/A |
| 16) | Z/A/B/A |
| 17) | Z/A/C/A |
| 18) | Z/A/B/C |
| 19) | Z/A/C/B. |

Besonders bevorzugt sind Strukturen gemäß 4), 6), 12), 15), 16), 17) und 19).

Vorzugsweise weist die Nahrungsmittelhülle neben der Außenschicht (Z) mindestens eine Schicht ausgewählt aus Schichten (A) mit einem Gehalt an thermoplastischer Substanz auf Basis von (Co-)Polyamid(en), Schichten (B) mit einem Gehalt an Polyolefin(en) und Schichten (C) mit einer Sperrwirkung für Sauerstoff und weitere Gase auf sowie gegebenenfalls zusätzlich auch mindestens eine Schicht HV als Haftvermittler-Zwischenschicht oder/und als Haftvermittler-Innenschicht.

Vorzugsweise enthält die Nahrungsmittelhülle mindestens eine Schicht (A) mit einem Gehalt an thermoplastischer Substanz auf Basis von (Co-)Polyamid(en) und eine Außenschicht (Z) sowie gegebenenfalls auch mindestens eine Schicht (B) mit einem Gehalt an Polyolefin(en), gegebenenfalls auch mindestens eine Schicht (C) mit einer Sperrwirkung für Sauerstoff und weitere Gase oder/und gegebenenfalls auch mindestens eine Schicht HV als Haftvermittler-Zwischenschicht oder/und als Haftvermittler-Innenschicht.

Vorzugsweise weist die Nahrungsmittelhülle neben der Außenschicht (Z) mindestens eine Schicht (A) mit einem Gehalt an thermoplastischer Substanz auf Basis von (Co-)Polyamid(en) und mindestens eine Schicht HV als Haftvermittler-Zwischenschicht oder/und Haftvermittler-Innenschicht auf.

Vorzugsweise ist die Nahrungsmittelhülle durch Coextrusion hergestellt worden und ist aufgebaut aus mindestens zwei Schichten, wobei sie mindestens eine Schicht (A) mit einem Gehalt an thermoplastischer Substanz auf Basis von (Co-)Polyamid(en) und eine Außenschicht (Z) enthält sowie gegebenenfalls auch mindestens eine Schicht (B) mit einem Gehalt an Polyolefin(en), gegebenenfalls auch mindestens eine Schicht (C) mit einer Sperrwirkung für Sauerstoff und weitere Gase oder/und gegebenenfalls auch mindestens eine Schicht HV als Haftvermittler-Zwischenschicht oder/und als Haftvermittler-Innenschicht.

Die Herstellung des Blends aus der thermoplastischen Kunststoffmatrix und den anorganischen Partikeln für die Schicht (Z) kann z.B. in einem Compoundierungsschritt nach an sich bekannten Verfahren erfolgen. Hieran kann sich eine Coextrusion als Schlauchextrusion anschließen. Die oben angegebenen Additive werden ebenfalls bei Bedarf während des Knet- bzw. Mischprozesses zugegeben und meist gleichmäßig oder im wesentlichen gleichmäßig in die Zusammensetzung für die Außenschicht (Z) eingearbeitet. Bei der Schlauchextrusion werden alle Schichten gleichzeitig geformt.

Die Herstellung der Nahrungsmittelhülle gemäß einer der beschriebenen Strukturen erfolgt durch Coextrusion und vorzugsweise anschließend durch Schlauchblasen oder biaxiale Schlauchstreckung. Entsprechende Verfahren sind dem Fachmann an sich geläufig.

Der Blend aus den anorganischen Partikeln und der Kunststoffmatrix sowie die weiteren vorgesehenen Polymere bzw. Gemische werden üblicherweise in separaten Extrudern aufgeschmolzen und plastifiziert sowie anschließend in einer beheizten Coextrusions-Ringdüse zusammengeführt. Der austretende ringförmige Schmelzefilm kann nun entweder direkt zu einem Folienschlauch aufgeblasen werden oder durch einen Biaxial-Streckprozeß mit gegebenenfalls nachgeschalteter Thermofixierung geführt werden. Bei letzterem Prozeß wird der Schmelzefilm durch schnelles Abkühlen zu einem amorphen Vorschlauch verfestigt und dieser durch anschließendes Wiedererwärmen auf meistens ca. 80 °C und mittels eines zwischen zwei Quetschwalzenpaaren eingeschlossenen Luftpolsters biaxial verstreckt. Die anschließende Thermofixierung kann erfolgen, indem der verstreckte Schlauch durch eine weitere Heizzone, gegebenenfalls unter Stabilisierung mit einem zweiten Luftpolster, geführt wird. Auf diese Weise läßt sich die thermische Schrumpfneigung der Hülle auf praxisrelevante Werte verringern, die in der Regel bei ca. 5 - 20 % in Längs- und Querrichtung liegen, und bei 80 °C gemessen werden.

Es war überraschend, dass es nach den intensiven Bemühungen verschiedener Hersteller von Nahrungsmittelhüllen gelang, Nahrungsmittelhüllen herzustellen, die Natur-, Kollagen-, Hautfaser- und faserverstärkten Cellulosedärmen weitgehend oder nahezu gänzlich gleichen.

### Beispiele und Vergleichsbeispiele

Im folgenden werden die Eigenschaften erfindungsgemäßer Hüllen durch ausgewählte Ausführungsbeispiele verdeutlicht.

### Beispiel 1: Cristobalit und PA 66, Blasschlauch

Mit Hilfe der Coextrusionstechnik wurde ein dreischichtiger Blasschlauch über drei Einschneckenextruder und nachgeschalteter Coextrusionsringdüse hergestellt mit
- einer Innenschicht bestehend aus Polyamid PA66 (®Ultramid A5),
- einer Mittelschicht bestehend aus 80 Gew.-% eines Polyethylen LDPE (®Lupolen 3020D) vermischt mit 20 Gew.-% eines MSA-gepfropften LLDPE als Haftvermittler (®Admer NF358E) und
- einer Außenschicht bestehend aus einem auf einem üblichen Zweiwellenkneter hergestellten Compound aus 93 Gew.-% Polyamid PA66 (®Ultramid A5) und 7 Gew.-% Cristobalit (®Silbond 006 MST).

Die Gesamtwandstärke der Hülle betrug bei einem Durchmesser von 105 mm 80 bis 100 µm. Die Innenschicht hatte daran einen mittleren Anteil von ca. 45 %, die Mittelschicht von ca. 10 % und die Außenschicht von ca. 45 %.

Dieser Hüllenaufbau entspricht dem oben beschriebenen Aufbau Z / B / A. Die Außenschicht (Z) ist besonders rauh und liefert einen außerordentlich geringen Oberflächenglanz. Die Oberflächeneigenschaften des Schlauches sind in Tabelle 1 zusammengestellt.

### Beispiel 2: Wollastonit und PA 6, Schlauch biaxial verstreckt und thermofixiert

Mit Hilfe der Coextrusionstechnik wurde ein dreischichtiger Primärschlauch über drei Einschneckenextruder und nachgeschalteter Coextrusionsringdüse hergestellt mit
- einer Innenschicht bestehend aus 80 Gew.-% PA6 (®Grilon F34) und 20 Gew.-% PA6I/6T (®Grivory G21),
- einer Mittelschicht bestehend aus einem Haftvermittler auf Basis von MSAgepfropftem LLDPE (®Modic-AP L513) und
- einer Außenschicht bestehend aus einem auf einem Zweiwellenkneter hergestellten Compound aus 89 Gew.-% Polyamid PA6 (®Grilon F34) und 11 Gew.-% Wollastonit (®Tremin 283 100 EST).

Der Primärschlauch wurde schnell auf ca. 20 °C abgekühlt und anschließend auf ca. 80 °C erwärmt und bei dieser Temperatur biaxial bei einem Flächenstreckverhältnis von 9,25 verstreckt. In einer weiteren Heizzone wurde der Schlauch anschließend thermofixiert, so dass der thermische Schrumpf - in Wasser bei 80 °C gemessen - noch ca. 10 bis 12 % betrug. Der Durchmesser des thermofixierten Schlauches betrug 108 mm bei einer Gesamtwandstärke von 80 bis 100 µm. Dabei entfielen ca. 40 % auf die Innenschicht, ca. 5 % auf die Mittelschicht und ca. 55 % auf die Außenschicht. Letztere Schicht ist die Außenschicht (Z). Sie zeichnet sich unter anderem durch einen sehr geringen Oberftächenglanz aus (siehe Tabelle 1). Dieser Hüllenaufbau entspricht dem oben beschriebenen Aufbau Z / HV / A.

### Beispiel 3: Quarz und PA 6, Schlauch biaxial verstreckt und thermofixiert

Wie in Beispiel 2 beschrieben wurde ein biaxial verstreckter thermofixierter dreischichtiger Schlauch mit einem Durchmesser von 108 mm bei einer Gesamtwandstärke von 80 bis 100 µm hergestellt. Im Unterschied zu den vorherigen Beispielen bestand die außen angeordnete Schicht aus einem auf einem Zweiwellenkneter hergestellten Compound aus 92 Gew.-% Polyamid PA6 (®Grilon F34) und 8 Gew.-% Quarz (®Silbond W6 EST). Auch die hier außen angeordnete Schicht (Z) zeichnet sich durch einen besonders geringen Oberflächenglanz aus (siehe Tabelle 1). Dieser Hüllenaufbau entspricht dem oben beschriebenen Aufbau Z / HV / A.

### Vergleichsbeispiel 1: Schlauch biaxial verstreckt und thermofixiert

In gleicher Weise wie in Beispiel 2 wurde ein biaxial verstreckter thermofixierter dreischichtiger Schlauch hergestellt bestehend aus:
- einer Innenschicht bestehend aus 85 Gew.-% PA6 (®Grilon F34) und 15 Gew.-% PA6I/6T (®Grivory G21),
- einer Mittelschicht bestehend aus 50 Gew.-% eines Polyethylen LDPE (®Escorene LD165BW) vermischt mit 50 Gew.-% eines MSA-gepfropften LLDPE als Haftvermittler (®Admer NF518E) und
- einer Außenschicht bestehend aus 83 Gew.-% PA6 (®Grilon F34), 10 Gew.-% PA6I/6T (®Grivory G21) und 7 Gew.-% braunen Farbstoff.

Die Gesamtwandstärke betrug hier 50 µm bei einem Durchmesser von 80 mm. Dabei betrug der Innenschichtanteil ca. 20 %, der Mittelschichtanteil ca. 40 % und der Außenschichtanteil ca. 40 %. Die Oberfläche ist im Vergleich zu den beschriebenen erfindungsgemäßen Hüllen sehr glatt und glänzend wie Tabelle 1 nachfolgend zeigt.

**Tabelle 1:**

| Zusammensetzung der Schicht (Z) und Eigenschaften ihrer Oberfläche aufgrund des Gehalts bzw. des Fehlens anorganischer Partikel | | | | | | | | | |
|---|---|---|---|---|---|---|---|---|---|
| **Beispiel** | **Außenschicht Z** | **Größenverteilung der Partikel in µm** | | **Rauhigkeit in in µm** | | | **Glanzwert** | **Haptischer Eindruck** | **Optischer Eindruck** |
| | | d₅₀ | d₉₅ | Rₐ | R_{z} | Rₘₐₓ | bei 60 | | |
| **1** | Cristobalit und PA 66 | 33 | 120 | 3,0 | 17,1 | 26,2 | 12,1 | sehr gut | sehr gut |
| **2** | Wollastonit und PA 6 | 8 | 50 | 2,5 | 11,1 | 16,3 | 16,3 | sehr gut | sehr gut |
| **3** | Quarz und PA 6 | 40 | 120 | 3,2 | 14,0 | 22,5 | 11,8 | sehr gut | sehr gut |
| **VB* 1** | ohne organische Partikel | - | - | 0,3 | 3,0 | 3,5 | 90,0 | sehr schlecht | sehr schlecht |

| | | | | | | | | | |
|---|---|---|---|---|---|---|---|---|---|
| *Vergleichsbeispiel | | | | | | | | | |

Tabelle 1 zeigt, dass sich die erfindungsgemäß beschriebenen Nahrungsmittelhüllen, die nach den oben beschriebenen Verfahren hergestellt wurden, durch die außen angeordnete Schicht (Z), die anorganischen Partikel enthält, deutlich von den üblichen Hüllen hinsichtlich ihrer Oberflächeneigenschaften unterscheiden.

Die Partikelgrößenverteilung der anorganischen Partikel wurde mit einem Lasergranulometer in verdünnter wässeriger Suspension bestimmt. Die Rauheitswerte wurden nach DIN 4762, ISO 4287/1 und DIN 4762/1 E mit einem Perthometer S5P mit dem Perthen-Taster RHT6/50E 6110457 (Diamond) bei einem Cut-Off-Grade von 0,8 mm ermittelt. Der Mittenrauhwert Rₐ ist der arithmetische Mittelwert aller Abweichungen des Rauheitsprofils von der Mittellinie innerhalb der Gesamtmeßstrecke. Die gemittelte Rauhtiefe R_{z} ist der Mittelwert aus den Einzelrauhtiefen von fünf aufeinanderfolgenden Einzelmessstrecken von je 5 mm Länge im Rauheitsprofil. Die maximale Rauhtiefe Rₘₐₓ ist die größte der fünf ermittelten Einzelrauhtiefen. Die Rauheitswerte wurden jeweils über 5 Messungen gemittelt.

Die Glanzwerte wurden nach DIN 67530, ISO 2813 und ASTM D 523 bei einem Einstrahlwinkel von 60 ° mit dem Gerät Micro Gloss 60 der Fa. BYK Gardner bestimmt. Hierbei wurde das von der Oberfläche reflektierte Licht fotoelektrisch erfasst. Je kleiner die Glanzwerte sind, desto matter erscheint die Oberfläche.

Die erfindungsgemäßen Hüllen sehen insbesondere einem Kollagendarm sehr ähnlich.

## Patentansprüche

1. Coextrudierte thermoplastische Nahrungsmittelhülle aufgebaut aus mindestens zwei Schichten einschließlich einer Außenschicht (Z), wobei die Außenschicht mehr als 50 Gew.-% an thermoplastischen Bestandteilen enthält und mindestens eine Schicht, die nicht die Außenschicht (Z) ist, mehr als 50 Gew.-% an thermoplastischen Bestandteilen auf Basis von (Co-)Polyamid(en) enthält, **dadurch gekennzeichnet, dass** in der Außenschicht (Z) anorganische Partikel verteilt sind, die zumindest teilweise einen Äquivalentkugeldurchmesser von größer als 20 µm aufweisen, und die Oberfläche der Außenschicht (Z) eine Rauhigkeit R_{z} gemittelt über 5 Messungen von mindestens 5,0 µm aufweist, wobei die Außenschicht kein wasserlösliches synthetisches Polymer enthält.

2. Nahrungsmittelhülle gemäß Anspruch 1, **dadurch gekennzeichnet, dass** die thermoplastischen Bestandteile in der Außenschicht (Z) auf (Co-)Polyamid(en) basieren.

3. Nahrungsmittelhülle gemäß Anspruch 1 oder 2, **dadurch gekennzeichnet, dass** mindestens eine der Schichten - mit Ausnahme der Außenschicht (Z) - eine tragende Funktion besitzt.

4. Nahrungsmittelhülle nach Anspruch 1, **dadurch gekennzeichnet, dass** die Außenschicht (Z) mindestens 0,05 Vol.-% anorganische Partikel mit einem Äquivalentkugeldurchmesser von mindestens 20 µm oder mit einem Partikelvolumen von mindestens 4189 µm³ enthält.

5. Nahrungsmittelhülle nach einem oder oder mehreren der Ansprüche 1 bis 4, **dadurch gekennzeichnet, dass** die Gesamtheit der anorganischen Partikel der Außenschicht (Z) oder zumindest ihre im wesentlichen isometrisch geformten Partikel eine Äquivalentkugeldurchmesservertellung mindestens im Bereich zwischen 20 und 40 µm aufweisen.

6. Nahrungsmittelhülle nach einem oder mehreren der Ansprüche 1 bis 5, **dadurch gekennzeichnet, dass** die Gesamtheit der anorganischen Partikel der Außenschicht (Z) zu mindestens 10 Vol.-% des Volumens aller anorganischen Partikel, im wesentlichen isometrisch geformte Partikel, oder/und zu mindestens 2 Vol.-% des Volumens aller anorganischen Partlkel im wesentlich faserig, nadelig oder/und linealartig geformte Partikel enthält.

7. Nahrungsmittelhülle nach einem oder mehreren der Ansprüche 1 bis 6, **dadurch gekennzeichnet, dass** die Außenschicht (Z) mindestens 0,5 Gew.-% anorganische Partikel enthält, worunter sich in der Außenschicht (Z) gegebenenfalls mindestens 0,1 Gew.-% anorganische Fasern befinden.

8. Nahrungsmittelhülle nach einem oder mehreren der Ansprüche 1 bis 7, **dadurch gekennzeichnet, dass** die anorganische Partikel vorwiegend oder weitgehend aus Partikeln auf Basis von Aluminiumoxid, Carbonat, Phosphat, Siliciumoxid, Silicat, Sulfat, Gestein oder/und glasartiger Substanz bestehen.

9. Nahrungsmittelhülle nach einem oder mehreren der Ansprüche 1 bis 9 8, **dadurch gekennzeichnet, dass** die Oberfläche der Außenschicht (Z) einen Glanzwert gemessen mit einem Gerät Micro Gloss 60 der Fa. BYK Gardner gemittelt über 5 Messungen von nicht mehr als 65 aufweist.

10. Nahrungsmittelhülle nach einem oder mehreren der Ansprüche 1 bis 9, **dadurch gekennzeichnet, dass** sie neben der Außenschicht (Z) mindestens eine Schicht ausgewählt aus Schichten (A) mit einem Gehalt an thermoplastischer Substanz auf Basis von (Co-)Polyamid(en), Schichten (B) mit einem Gehalt an Polyolefn(en) und Schichten (C) mit einer Sperrwirkung für Sauerstoff und weitere Gase aufweist sowie gegebenenfalls zusätzlich auch mindestens eine Schicht HV als Haftvermittler Zwischenschicht oder/und als Haftvermittler-Innenschicht.

11. Nahrungsmittelhülle nach einem oder mehreren der Ansprüche 1 bis 10, **dadurch gekennzeichnet, dass** sie neben der Außenschicht (Z) mindestens eine Schicht (A) mit einem Gehalt an thermoplastischer Substanz auf Basis von (Co-)Polyamid(en) und mindestens eine Schicht HV als Haftvermittler Zwischenschicht oder/und Haftvermittler-Innenschicht aufweist.

12. Nahrungsmittelhülle nach einem oder mehreren der Ansprüche 1 bis 11, **dadurch gekennzeichnet, dass** sie biaxial verstreckt ist und einen Restschrumpf von 5 bis 20 % in Längs- und Querrichtung aufweist, gemessen nach 20 min Lagerung in 80 °C warmem Wasser.

13. Nahrungsmittelhülle nach einem oder mehreren der Ansprüche 1 bis 12, **dadurch gekennzeichnet, dass** sie blasverformt ist.

14. Verwendung der Nahrungsmittelhülle nach einem oder mehreren der Ansprüche 1 bis 13 als künstliche Wursthülle.

## Claims

1. A coextruded thermoplastic food casing composed of at least two layers inclusive of an external layer (Z), where the external layer comprises more than 50 % by weight of thermoplastic constituents, and at least one layer, which is not the external layer (Z), comprises more than 50 % by weight of thermoplastic constituents based on (co)polyamide(s), wherein within the external layer (Z) there are inorganic particles distributed, at least some of which have an equivalent spherical diameter greater than 20 µm, and the roughness R_{z} of the surface of the external layer (Z), averaged over 5 measurements, is at least 5.0 µm, where the external layer comprises no water-soluble synthetic polymer.

2. The food casing as claimed in claim 1, wherein the thermoplastic constituents in the external layer (Z) are based on (co)polyamide(s).

3. The food casing according to claim 1 or 2, wherein at least one of the layers - with the exception of the external layer (Z) - has a supportive function.

4. The food casing as claimed in claim 1, wherein the external layer (Z) comprises at least 0.05 % by volume of inorganic particles with an equivalent spherical diameter of at least 20 µm or with a particle volume of at least 4189 µm³.

5. The food casing as claimed in one or more of claims 1 to 4, wherein the equivalent spherical diameter distribution of all the inorganic particles of the external layer (Z) or of at least the particles having in essence isometric shape therein, is at least in the range from 20 to 40 µm.

6. The food casing as claimed in one or more of claims 1 to 5, wherein at least 10 % by volume of all of the inorganic particles of the external layer (Z) are particles having in essence isometric shape, or/and at least 2 % by volume of all of the inorganic particles are particles having in essence fibrous, acicular, or/and linear shape.

7. The food casing as claimed in one or more of claims 1 to 6, wherein the external layer (Z) comprises at least 0.5 % by weight of inorganic particles, among which there are, if appropriate, at least 0.1 % by weight of inorganic fibers located in the external layer (Z).

8. The food casing as claimed in one or more of claims 1 to 7, wherein the inorganic particles are composed predominantly or substantially of particles based on aluminum oxide, on carbonate, on phosphate, on silicon oxide, on silicate, on sulfate, on stone, or/and on a glassy substance.

9. The food casing as claimed in one or more of claims 1 to 8, wherein the gloss value of the surface of the external layer (Z) averaged over 5 measurements is not more than 65, measured by a Micro Gloss 60 device from BYK Gardner.

10. The food casing as claimed in one or more of claims 1 to 9, which comprises, alongside the external layer (Z), at least one layer selected from layers (A) comprising thermoplastic substance based on (co)polyamide(s), layers (B) comprising polyolefin(s), and layers (C) having barrier action for oxygen and other gases, and also, if appropriate, at least one additional layer HV which is an intermediate adhesion-promoter layer or/and is an internal adhesion-promoter layer.

11. The food casing as claimed in one or more of claims 1 to 10, which comprises, alongside the external layer (Z) at least one layer (A) comprising thermoplastic substance based on (co)polyamide(s), and at least one layer HV which is an intermediate adhesion-promoter layer or/and is an internal adhesion-promoter layer.

12. The food casing as claimed in one or more of claims 1 to 11, which has been biaxially oriented and has residual longitudinal and transverse shrinkage of from 5 to 20 %, measured after 20 min of storage in water at 80 °C.

13. The food casing as claimed in one or more of claims 1 to 12, the shape of which has been altered by blowing.

14. The use of the food casing as claimed in one or more of claims 1 to 13 as synthetic sausage casing.

## Revendications

1. Enveloppe alimentaire thermoplastique co-extrudée constituée d'au moins deux couches comprenant une couche externe (Z), la couche externe contenant plus de 50 % en poids de composants thermoplastiques et au moins une couche qui n'est pas la couche externe, contenant plus de 50 % en poids de composants thermoplastiques à base de (co)polyamides, **caractérisée en ce que** les particules inorganiques sont réparties dans la couche externe (Z) et présentent au moins partiellement un diamètre sphérique équivalent supérieur à 20 µm, et la surface de la couche externe (Z) présente une rugosité R_{z} déterminée sur 5 mesures, d'au moins 5,0 µm, la couche externe ne contenant pas de polymère synthétique hydrosoluble.

2. Enveloppe alimentaire selon la revendication 1, **caractérisée en ce que** les composants thermoplastiques de la couche externe (Z) sont à base de (co)-polyamide(s).

3. Enveloppe alimentaire selon la revendication 1 ou la revendication 2, **caractérisée en ce qu'**au moins l'une des couches, à l'exception de la couche externe (Z), a une fonction de support.

4. Enveloppe alimentaire selon la revendication 1, **caractérisée en ce que** la couche externe (Z) contient au moins 0,05 % en volume de particules inorganiques présentant un diamètre sphérique équivalent d'au moins 20 µm ou un volume de particules d'au moins 4189 µm³.

5. Enveloppe alimentaire selon une ou plusieurs des revendications 1 à 4, **caractérisée en ce que** la totalité des particules inorganiques de la couche externe (Z) ou au moins ses particules formées de façon essentiellement isométrique, présente une répartition de diamètres sphériques équivalents au moins dans une plage entre 20 et 40 µm.

6. Enveloppe alimentaire selon une ou plusieurs des revendications 1 à 5, **caractérisée en ce que** la totalité des particules inorganiques de la couche externe (Z) contient au moins 10 % en volume du volume de toutes les particules inorganiques, des particules formées de façon essentiellement isométrique et/ou d'au moins 2 % en volume de toutes les particules inorganiques des particules formées de façon essentiellement fibreuse, aciculaire et/ou linéaire.

7. Enveloppe alimentaire selon une ou plusieurs des revendications 1 à 6, **caractérisée en ce que** la couche externe (Z) contient au moins 0,5 % en poids de particules inorganiques, parmi lesquelles se trouvent, dans la couche externe (Z) éventuellement au moins 0,1 % en poids de fibres inorganiques.

8. Enveloppe alimentaire selon une ou plusieurs des revendications 1 à 7, **caractérisée en ce que** les particules inorganiques sont constituées principalement ou largement de particules à base d'oxyde d'aluminium, de carbonate, de phosphate, d'oxyde de silicium, de silicate, de sulfate, de roche et/ou de substance vitreuse.

9. Enveloppe alimentaire selon une ou plusieurs des revendications 1 à 8, **caractérisée en ce que** la surface de la couche externe (Z) présente une brillance mesurée à l'aide d'un appareil Micro Gloss 60 de la société BYK Gardner déterminée sur 5 mesures, inférieure à 65.

10. Enveloppe alimentaire selon une ou plusieurs des revendications 1 à 9, **caractérisée en ce qu'**elle présente, outre la couche externe (Z), au moins une couche choisie parmi les couches (A) présentant une teneur en substance thermoplastique à base de (co)-polyamide(s), les couches (B) présentant une teneur en polyoléfine(s) et les couches (C) exerçant un effet barrière à l'oxygène et autres gaz, et éventuellement au moins aussi une couche HV servant de couche intermédiaire adhésive et/ou de couche interne adhésive.

11. Enveloppe alimentaire selon une ou plusieurs des revendications 1 à 10, **caractérisée en ce qu'**elle présente, outre la couche externe (Z), au moins une couche (A) présentant une teneur en substance thermoplastique à base de (co)-polyamide(s) et au moins une couche HV servant de couche intermédiaire adhésive et/ou de couche interne adhésive.

12. Enveloppe alimentaire selon une ou plusieurs des revendications 1 à 11, **caractérisée en ce qu'**elle est étirée biaxialement et présente un rétrécissement résiduel de 5 à 20 % dans le sens longitudinal et le sens perpendiculaire, mesuré après 20 min de stockage dans de l'eau à 80° C.

13. Enveloppe alimentaire selon une ou plusieurs des revendications 1 à 12, **caractérisé en ce qu'**elle est formée par soufflage.

14. Utilisation de l'enveloppe alimentaire selon une ou plusieurs des revendications 1 à 13 en tant qu'enveloppe de saucisse artificielle.
